Europäisches Patentamt

(19) European Patent Office

Office européen des brevets

(11) Publication number : **0 380 721 B1**

(12) **EUROPEAN PATENT SPECIFICATION**

(45) Date of publication of patent specification :
22.11.95 Bulletin 95/47

(51) Int. Cl.⁶ : **G06K 9/48**

(21) Application number : **89101572.9**

(22) Date of filing : **30.01.89**

(54) **Image processing method.**

(43) Date of publication of application :
**08.08.90 Bulletin 90/32**

(45) Publication of the grant of the patent :
**22.11.95 Bulletin 95/47**

(84) Designated Contracting States :
**BE DE FR GB GR IT NL SE**

(56) References cited :
**PROCEEDINGS OF THE FALL JOINT COM-
PUTER CONFERENCE, San Francisco, Califor-
nia, 9th - 11th December 1968, (AFIPS Conf.
Proceedings, vol. 33), pages 1125-1138; J.H.
MUNSON: "Experiments in the recognition of
hand-printed text: Part I -Character recog-
nition"
COMP. GRAPH. & IMAGE PROC., vol. 9, no.2,
February 1979, pages 183-195, Academic
Press Inc.; R.L.T. CEDERBERG: "A new
method for vector generation"**

(73) Proprietor : **EZEL INC.**
**3-5-18, Kitazawa**
**Setagaya-ku Tokio 155 (JP)**
Proprietor : **SHARP KABUSHIKI KAISHA**
**22-22 Nagaike-cho**
**Abeno-ku**
**Osaka 545 (JP)**

(72) Inventor : **Kumagai, Ryohei C/O EZEL Inc.**
**Nihonseimei Yotsuya Bldg.**
**16-2 Samon-cho**
**Shinjuku-ku Tokyo 160 (JP)**

(74) Representative : **Grünecker, Kinkeldey,
Stockmair & Schwanhäusser Anwaltssozietät
Maximilianstrasse 58
D-80538 München (DE)**

## Description

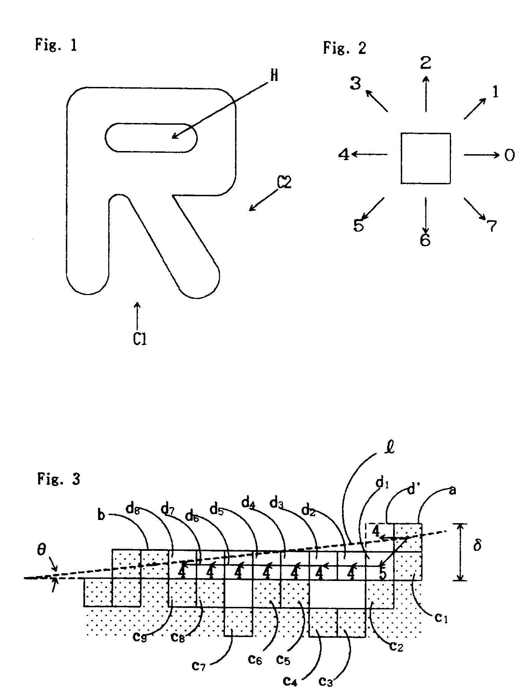

In the case of recognizing a hand-written character "R" as shown in Fig. 1, the concavities C1 and C2 and the hole H will be the key points for recognition. It will be understood that the concavities, convexities and holes are important characteristics of a configuration. For extracting these characteristics, for example, a convex hull of a configuration is generated and the original configuration is subtracted from the convex hull. However, in a digital image, the convex hull cannot always be precisely generated. In a digital image, the convex hull is generated by connecting top points successively with lines and by filling the inside of the lines. However, the line in the digital image differs according to the algorithm of line drawing. Thus a one dot deviation may easily occur since an analogue line does not necessarily pass through the center of a digital pixel. When a pixel is selected, as a pixel on the convex hull which differs considerably from the analogue convex hull, the configuration generated by the subtraction of the original image from the convex hull does not correctly represent the characteristics of the character. Usually a digital line is drawn by a graphic processor, i.e according to the algorithm of a processor.

When the convex hull is not drawn in a precise manner, the analysis after the above subtraction cannot be well performed.

In PROCEEDINGS OF THE FALL JOINT COMPUTER CONFERENCE, San Francisco, California, 9th - 11th December 1968, (AFIPS Conf. Proceedings, vol. 33), pages 1125-1138; J.H. MUNSON: "Experiments in the recognition of hand-printed text: Part 1 - Character recognition", it is suggested, in order to recognise hand-printed character, to generate a convex hull boundary (CHB round the character, whereby this is achieved by determining all extremal points of the character image and connecting thes extremal points by straight lines, whereby a straight line between two extremal points follows as straight as possible a theoretical straight line between the two extremal points but never falls outside of that theoretical straight line. After the CHB is obtained, concavities and enclosures of the character image are found by using appropriate computer routines.

In COMP. GRAPH. & IMAGE PROC., vol. 9, no. 2, February 1979, pages 183 - 195, Academic Press Inc.; R.L.T. CEDERBERG: "A new method for vector generation", referring to the Bresenham algorithm, an algorithm for the computation of constants in an equation determining the smoothest digital representation of a straight line is presented. In particular it is suggested to approximate a theoretical straight line by first determining a basic chain code group approximating a portion of the straight line and then to repeat the found basic chain code group in accordance with the length of the straight line to be approximated.

It is therefore the object of the present invention to provide an improved method for recognising a configuration by which it is possible to generate a representation of a convex hull boundary of the configuration which, in between two extremal pixels, follows as straight a path as possible while never falling outside the theoretical straight line connecting the extremal pixels.

This object is solved by the subject-matter defined in the characterising part of claim 1.

A preferred embodiment of the present invention is explained in the following with regard to the accompanying drawings, whereby the drawings show:

Fig. 1 - a hand-written character "R";

Fig. 2 - an illustration of the definition of a chain code;

Fig. 3 - a diagram showing a concavity of a configuration; and

Fig. 4 - an illustration of the 4 quadrants of an image

As shown in Fig. 2, a pixel in a digital image has 8 peripheral pixels, so there are 8 directions from one pixel to an adjacent pixel. These directions are represented by Freeman's chain codes, from "0" to "7". A chain code string represents a continuous train of pixels as well as the deviation of each pixel from a line.

Fig. 3 shows a concavity of a configuration consisting of extremal points a and b on the convex hull and boundary pixels from C1 to C9. A reference line $\ell$ is drawn for representing an analogue convex hull. The digital convex hull should never fall outside of the theoretical line $\ell$ and it should follow the theoretical line $\ell$ as closely as possible. The respective pixels are selected continuously and successively from one extremal point, for example the point a, to the other. Pixel order may be clockwise or anticlockwise. The anticlockwise order is applied in the following description.

A chain code to be given to the extremal point a is "4" or "5" and cannot be other codes. The pixel d' indicated by "4" is nearer than the pixel dl indicated by "5" to the line $\ell$. However, the pixel d' is outside of the line $\ell$. Therefore the pixel d1 is selected as a pixel adjacent to the extremal point a for generating the convex hull. In the same manner, pixels from d2 to d8 are continuously and successively selected until extremal point b is reached. The line $\ell$ is defined by the coordinates of the extremal points a and b. The distance between the line $\ell$ and each pixel of d1 to d8 is defined by the chain code train given to the pixels from d1 to d8. The inclination of angle $\theta$ of the line is defined by the coordinates of the extremal points a and b. The distance between the line $\ell$ and each pixel of d1 to d8 is defined by the inclination angle $\theta$ and the chain code train. The distance

$\Delta$ between the line $\ell$ and the pixel d1 is calculated when the chain code is "5" as follows;

$$\Delta = (\delta/\sin 45°)\sin(45° - \theta)$$
$$= -\delta(\sin\theta - \cos\theta)$$

where,

$\delta$ is the width of a pixel as well as the distance between vertically or horizontally adjacent pixels;

$\Delta$ becomes negative when the pixel is outside of line $\ell$. The value $\Delta$ for the pixels after the pixel d1 gives distance increase or decrease. When the value $\Delta$ for d1 is $\Delta$d1 and for d2 $\Delta$d2, the distance between the line and the pixel d2 is ($\Delta$d1 + $\Delta$d2). The value $\Delta$ for each chain code may be calculated beforehand. The pixels are selected in a manner that the distance becomes a minimum, and never becomes negative.

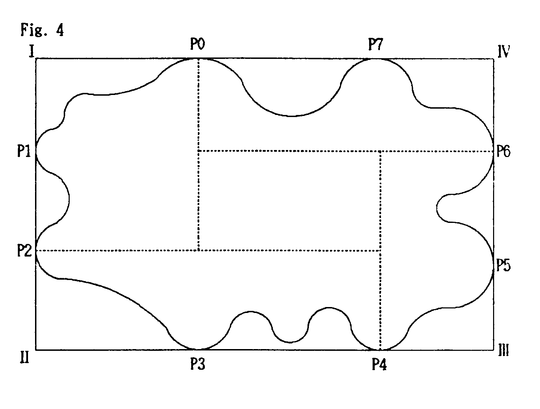

A configuration can be divided into four quadrants, from the first to the fourth. When upper end pixels of the configuration in Fig. 4 are designated P0 and P7, lower end pixels P3 and P4, left end pixels P1 and P2 and right end pixels P5 and P6, in each of the areas, from P0 to P2, from P2 to P4, from P4 to P6, and from P6 to P0, the distance increase or decrease is defined only by the chain code. The area P0 to P2, P2 to P4, P4 to P6 and P6 to P0 are now called the first, second, third and fourth quadrant, respectively. The distance increase or decrease in each quadrant is shown is Table 1. In Table 1, the inclination $\theta$ of the line is measured anticlockwisely from a horizontal line and $\delta$ designates the distance between horizontally or vertically adjacent pixels.

## Table 1

| Chain Code | Quadrant I, IV | Quadrant II, III |
|:---:|:---:|:---:|
| 0 | $\delta\sin\theta$ | $-\delta\sin\theta$ |
| 1 | $\delta(\sin\theta-\cos\theta)$ | $-\delta(\sin\theta-\cos\theta)$ |
| 2 | $-\delta\cos\theta$ | $\delta\cos\theta$ |
| 3 | $-\delta(\sin\theta+\cos\theta)$ | $\delta(\sin\theta+\cos\theta)$ |
| 4 | $-\delta\sin\theta$ | $\delta\sin\theta$ |
| 5 | $-\delta(\sin\theta-\cos\theta)$ | $\delta(\sin\theta-\cos\theta)$ |
| 6 | $\delta\cos\theta$ | $-\delta\cos\theta$ |
| 7 | $\delta(\sin\theta+\cos\theta)$ | $-\delta(\sin\theta+\cos\theta)$ |

In Fig. 3, distances from the line 1 to pixels of d1 to d8 are calculated as follows;

d1: $-\delta(\sin\theta-\cos\theta)$
d2: $-\delta(\sin\theta-\cos\theta)-\delta\sin\theta$
d3: $-\delta(\sin\theta-\cos\theta)-2\delta\sin\theta$
d4: $-\delta(\sin\theta-\cos\theta)-3\delta\sin\theta$
d5: $-\delta(\sin\theta-\cos\theta)-4\delta\sin\theta$
d6: $-\delta(\sin\theta-\cos\theta)-5\delta\sin\theta$
d7: $-\delta(\sin\theta-\cos\theta)-6\delta\sin\theta$
d8: $-\delta(\sin\theta-\cos\theta)-7\delta\sin\theta$

The distance increase or decrease in Table 1 can be easily calculated beforehand when $\theta$ is determined. Therefore. the trigonometric calculation is not necessary for each pixel.

## Claims

1. Method for recognizing a configuration which has been pixelwise stored in an image processing device, said method comprising generating chain code train segments for describing a convex hull boundary, CHB, of the configuration, said generation including the steps of:
   - determining extremal pixels of the figure which are common with the CHB,
   - calculating straight lines between all adjacent extremal pixels,
   - approximating each straight line by a line defined by a chain code train segment, said line following said straight line as closely as possible but never falling outside the area between said straight line and the configuration,

- characterised in that the selection of each single chain code element of a chain code train section is achieved by calculating the distance between the respective straight line and the top point of the line as defined by the latest chain code element of the elements of the chain code train section which have already been selected and selecting the next chain code element under the criterion of minimization of said distance.

2. Method according to claim 1, whereby the distance increment or decrement caused by each different chain code element is calculated before a chain-code-train-section is generated.

3. Method according to claim 1 or 2 whereby said calculating includes calculating the inclination angle of the straight line.

**Patentansprüche**

1. Verfahren zum Erkennen einer Konfiguration, die pixelweise in einer Bildverarbeitungseinrichtung gespeichert ist, wobei das Verfahren das Erzeugen von Chain-Code-Zug-Segmenten zum Beschreiben einer CHB der Konfiguration umfaßt und die Erzeugung folgender Schritte aufweist:
   Bestimmen von Extremalpixeln der Konfiguration, welche auf der CHB liegen;
   Berechnen gerader Linien zwischen benachbarten Extremalpixeln;
   Annähern jeder geraden Linie durch eine Linie, die durch ein Chain-Code-Zug-Segment definiert ist, wobei die Linie der geraden Linie so nahe wie möglich folgt, jedoch nie aus dem Bereich zwischen der geraden Linie und der Konfiguration fällt, dadurch gekennzeichnet, daß die Auswahl eines jeden einzelnen Chain-Code-Elements eines Chain-Code-Zugabschnitts dadurch erreicht wird, daß der Abstand zwischen der entsprechenden geraden Linie und dem Top-Punkt der Linie, wie er durch das letzte Chain-Code-Element der Elemente des Chain-Code-Zugabschnitts, die bereits ausgewählt wurden, definiert ist, berechnet wird und in dem das nächste Chain-Code-Element unter dem Kriterium der Minimierung des Abstandes gewählt wird.

2. Verfahren nach Anspruch 1, wobei das Abstands-Inkrement oder Dekrement, das durch jedes unterschiedliche Chain-Code-Element bewirkt wird, berechnet wird, noch bevor der Chain-Code-Zugabschnitt erzeugt wird.

3. Verfahren nach Anspruch 1 oder 2, wobei das Berechnen die Berechnung des Neigungswinkels der geraden Linie mit einschließt.

**Revendications**

1. Procédé de reconnaissance d'une configuration qui a été mémorisée sous forme de pixels dans un dispositif de traitement d'image, ledit procédé comprenant la formation de segments d'un train de code à enchaînement pour définir une limite d'une coque convexe, CHB, de la configuration, ladite génération comprenant les opérations suivantes :
   - détermination des pixels extrêmes de la figure qui sont communs avec la CHB,
   - calcul des droites joignant tous les pixels extrêmes adjacents,
   - approximation de chaque droite au moyen d'une ligne définie par un segment du train de code à enchaînement, ladite ligne suivant ladite droite d'aussi près que possible mais ne passant jamais à l'extérieur de la surface séparant ladite droite de ladite configuration,
   caractérisé en ce que le choix de chaque élément unique des code à enchaînement d'une partie de train de code à enchaînement est effectué en calculant la distance entre la droite correspondante et le point supérieur de la ligne défini par le dernier élément de code à enchaînement parmi les éléments de la section du train de code à enchaînement qui ont déjà été choisis et en sélectionnant l'élément suivant de code à enchaînement d'après le critère consistant à minimiser cette distance.

2. Procédé selon la revendication 1, dans lequel l'incrément ou le décrément de distance créé par chaque élément différent des code à enchaînement est calculé avant la formation d'une section de train de code à enchaînement.

3. Procédé selon l'une des revendications 1 ou 2, dans lequel ledit calcul comprend le calcul de l'angle d'inclinaison de la droite.

Fig. 1

Fig. 2

Fig. 3

Fig. 4